# EUROPEAN PATENT SPECIFICATION

(11) **EP 3 454 519 B1**
(45) Date of publication and mention of the grant of the patent: **21.07.2021**
(21) Application number: 16924363.1
(22) Date of filing: 23.12.2016
(51) Int. Cl.: G06F 21/31

(54) **BLOCK GENERATION METHOD AND DEVICE, AND BLOCKCHAIN NETWORK**
BLOCKERZEUGUNGSVERFAHREN UND -VORRICHTUNG UND BLOCKKETTENNETZWERK
PROCÉDÉ ET DISPOSITIF DE GÉNÉRATION DE BLOCS, ET RÉSEAU DE CHAÎNES DE BLOCS

(43) Date of publication of application: 13.03.2019
(73) Proprietor: CloudMinds (Shanghai) Robotics Co., Ltd., Shanghai 200245 (CN)
(72) Inventor: WANG, Jian, Shenzhen Guangdong 518000 (CN); XIE, Hui, Shenzhen Guangdong 518000 (CN)
(74) Representative: Noréns Patentbyrå AB
(86) International application number: PCT/CN2016/111859
(87) International publication number: WO 2018/112948

(56) References cited:
- CN-A- 105 610 578
- CN-A- 105 956 923
- CN-A- 105 959 307
- US-A1- 2005 114 666
- US-A1- 2016 218 879
- Gideon Greenspan ET AL: "MultiChain Private Blockchain - White Paper", , 24 July 2015 (2015-07-24), XP055588977, Retrieved from the Internet: URL:http://web.archive.org/web/20150724003 212if_/http://www.multichain.com/download/ MultiChain-White-Paper.pdf [retrieved on 2019-05-15]

## Description

### Field of the Invention

The invention relates to the field of blockchain technology, in particular to a block generation method, a device and a blockchain network.

### Background of the Invention

The blockchain technology is a distributed, decentralized, and detrusted network data consensus storage technology. It implements synchronization of distributed computing based on a unique block generation mechanism and a P2P (Point to Point) network communication mechanism.

Generally speaking, in the process of forming a blockchain, each node participating in the computation has the same authority, including transaction, block computation and other authorities. In the prior art, the computing power of the nodes participating in the block computation is uneven. In order to increase the probability of generating blocks, the hardware used by the nodes for block computation has evolved from a CPU (Central Processing Unit), a GPU (Graphics Processing Unit) and an FPGA (Field Programmable Gate Array) to an ASIC (Application-specific integrated circuit). However, the blockchain involves a "51% attack" scenario. Namely, a node or multiple nodes theoretically exceeding 51% of the computing power can perform a "51% attack" on the blockchain, which obstructs the normal operation of the blockchain and destroying data of the blockchain. At present, with the increase in the computing power of a single node, the single or a few nodes together may have great computing ability. Thus, in the case that the computing power of the various nodes in the whole blockchain network is greatly different, the condition of forming the "51% attack" has become not difficult to achieve, threatening the safety of the blockchain network. Patent application US2016/218879 discloses a method, wherein a block chain can be created and the mining of new blocks can be limited to certain actors holding a specific set of private keys and verified by the corresponding public keys accessible to consumers interested in validating the block chain. These keys are stored in software or on specific hardware devices designed to not reveal the private key. Only blocks mined using those keys are acceptable on the block chain.

### Summary of the Invention

The main object of the present invention is to provide a block generation method, a device and a blockchain network for improving the safety of a blockchain.

In order to achieve the above object, a first aspect of the present invention provides a block generation method, the method is applied to a block generation device, private key information is built in the block generation device, and the method comprises: signing a block generated by the block generation device according to the private key information to obtain a signed block; and
issuing the signed block to other node devices through a first node device in the blockchain network.

A second aspect of the present invention provides a block generation method, the method is applied to a block generation device, and the method comprises:
obtaining, through a second node device, a signed block issued by a first node device in a blockchain network;
performing signature verification on the signed block according to public key information;
performing proof-of-work verification on the signed block after the signification verification succeeds; and
determining whether to add the signed block to a blockchain according to a result of the proof-of-work verification.

A third aspect of the present invention provides a block generation device, private key information is built in the block generation device, and the block generation device comprises:
a signing module for signing a block generated by the block generation device according to the private key information to obtain a signed block; and
an issuing module for issuing the signed block to other node devices through a first node device in a blockchain network.

A fourth aspect of the present invention provides a block generation device, comprising:
an obtaining module for obtaining, through a second node device, a signed block issued by a first node device in the blockchain network;
a signature verification module for performing signature verification on the signed block by utilizing public key information;
a proof-of-work module for performing proof-of-work verification on the signed block after the signature verification succeeds; and
a block adding module for determining whether to add the block obtained after decryption to a blockchain according to a result of the proof-of-work verification.

A fifth aspect of the present invention provides a block generation device, comprising:
at least one processor unit, a communication intcrfacc, a memory and a communication bus; the at least one processor unit, the communication interface, and the memory communicate with each other through the communication bus;
the memory is configured to store program codes;
the at least one processor unit is configured to run the program codes to implement the following operations:
   signing a block generated by the block generation device according to private key information built in the block generation device to obtain a signed block; and issuing the signed block to other node devices through a first node device in the blockchain network.

A sixth aspect of the present invention provides a block generation device, comprising:
at least one processor unit, a communication interface, a memory and a communication bus; the at least one processor unit, the communication interface, and the memory communicate with each other through the communication bus;
the memory is configured to store program codes;
the at least one processor unit is configured to run the program codes to implement the following operations:
   obtaining, through a second node device, a signed block issued by a first node device in the blockchain network;
   performing signature verification on the signed block according to public key information;
   performing proof-of-work verification on the signed block after the signature verification succeeds; and
   determining whether to add the signed block to a blockchain according to a result of the proof-of-work verification.

A seventh aspect of the present invention provides a blockchain network, wherein the blockchain network includes at least two node devices;
the at least two node devices include a first node device, wherein the first node device comprises the block generation device described in the third aspect or the first node device comprises the block generation device described in the fifth aspect; and
the at least two node devices include a second node device, wherein the second node device comprises the block generation device described in the fourth aspect, or the second node device comprises the block generation device described in the sixth aspect.

An eighth aspect of the present invention provides a computer readable storage medium for storing a computer program, wherein the computer program comprises instructions for performing the method described in the first aspect.

A ninth aspect of the present invention provides a computer readable storage medium for storing a computer program, wherein the computer program comprises instructions for performing the method described in the second aspect.

By adopting the above technical solution, after the block is generated by the block generation device, the block is signed with the private key, and the signed block obtained after being signed with the private key is issued to other node devices through the first node device in the blockchain network. In this way, other node devices may verify the identity of the block generation device through the signature verification of the signed block. Thus, for the illegal block generating device, the blockchain network may refuse to add the generated block to the blockchain, and further ensure the safety of the blockchain.

The invention is defined by the independent claims.

### Brief Description of the Drawings

In order to illustrate the embodiments of the present invention or the technical solutions in the prior art more clearly, the drawings which need to be used in the description of the embodiments will be briefly described below. It is obvious that the drawings in the following description are about some embodiments of the present invention. For those of ordinary skill in the art, other drawings may also be obtained according to the drawings without creative work.
Fig. 1 is a schematic flowchart of a block generation method provided by an embodiment of the present invention;
Fig. 2 is a schematic flowchart of another block generation method provided by an embodiment of the present invention;
Fig. 3 is a schematic diagram of an implementation environment provided by an embodiment of the present invention;
Fig. 4 is a schematic flowchart of a block generation method in the implementation environment of Fig. 3;
Fig. 5A is a schematic structural diagram of a block generation device provided by an embodiment of the present invention;
Fig. 5B is a schematic structural diagram of another block generation device provided by an embodiment of the present invention;
Fig. 6 is a schematic structural diagram of another block generation device provided by an embodiment of the present invention;
Fig. 7A is a schematic structural diagram of another block generation device provided by an embodiment of the present invention;
Fig. 7B is a schematic structural diagram of another block generation device provided by an embodiment of the present invention;
Fig. 8 is a schematic structural diagram of another block generation device provided by an embodiment of the present invention; and
Fig. 9 is a schematic structural diagram of a blockchain network provided by an embodiment of the present invention.

### Detailed Description of the Embodiments

In order to enable the objects, the technical solutions and the advantages of the embodiments of the present invention to become clearer, the technical solutions in the embodiments of the present invention will be clearly and completely described below with reference to the accompanying drawings in the embodiments of the present invention. Obviously, the described embodiments are only part of the embodiments of the present invention rather than all of the embodiments. Based on the embodiments in the present invention, all the other embodiments obtained by those of ordinary skill in the art without creative work are still within the protection scope of the present invention.

In order to enable those of skill in the art to understand the technical solutions provided by the embodiments of the present invention more easily, the related technologies involved will be first briefly introduced below.

A blockchain is a decentralized, distributed database system in which all nodes in a blockchain network participate in maintenance. It is composed of a series of data blocks generated on the basis of cryptography, and each data block is a block in the blockchain. The blocks are linked together orderly according to their generation time sequence to from a data chain, which is vividly called the blockchain.

In a block generation mechanism based on PoW (Proof of Work), the generation of effective blocks requires a block generation device to correctly solve a difficult mathematical problem requiring the computation of the quantity. In general, hash operation is performed on block header data containing nonce (number once), the nonce is adjusted to enable the hash result to satisfy a specific condition, and it is required that the generated hash value satisfies a specific condition, for example, the first n bits are 0 × 0. After the hash result satisfying the specific conditions is calculated, a node device combines the block header data containing the nonce and block data into a block for broadcasting, and after other node devices approve that the block conforms to the format and the standard defined by the protocol, the block can be added to a blockchain. For details, please refer to the bitcoin application.

It should be noted that in the PoW scenario, the computing power of the block generation device is usually based on a hash rate. In addition, the above the block data may include transaction data broadcast by various node devices in the transaction process. The transaction data usually includes a certain currency attribute, as well as the owner's digital signature and the address of the recipient. After the transaction data is written into the block, by verifying the digital signature of the owner, the ownership is transferred to the recipient.

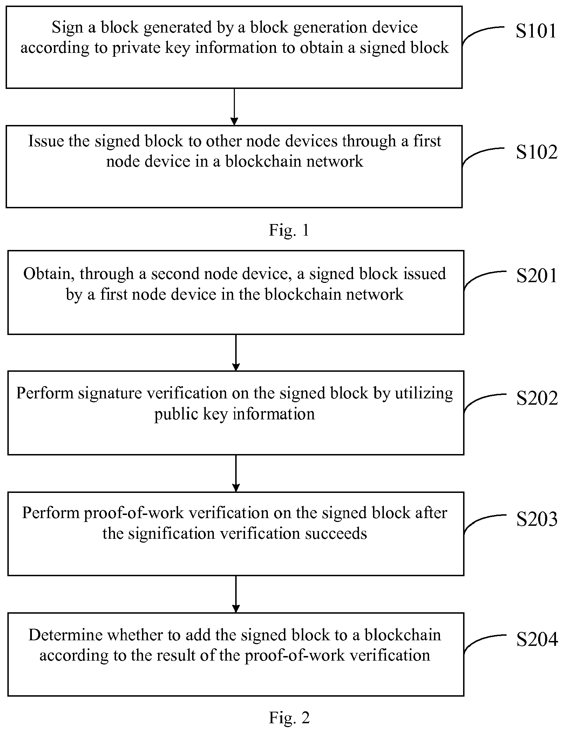

An embodiment of the present invention provides a block generation method, the method is applied to a block generation device, private key information is built in the block generation device, as shown in Fig. 1, and the method comprises the following. In S101, a block generated by the block generation device is signed according to the private key information to obtain a signed block.

The block generation device may be part of any node device in a blockchain network, or may be a separate device that establishes a communication connection with any node device in the blockchain network. Specifically, the block generation device may be connected to the node device through different data buses, such as USB (Universal Serial Bus), Ethernet, Bluetooth, Wi-Fi (Wireless-Fidelity) and the like.

Refer to the above introduction of the PoW block generation mechanism. Exemplarily, the block generation device is communicatively connected with a first node device. The first node device is the node device in the blockchain network, and may receive transaction data broadcast by other node devices in the blockchain network through a network interface. In this way, the block generation device may obtain the transaction data from the first node device, use the transaction data as block data, perform hash operation on block header data containing nonce, enable the hash result to satisfy a specific condition and then generate a block according to the block data and the block header data.

The above is only an example of a method of generating the block by the block generation device. In specific implementation, the block generation device may still generate the block without obtaining the transaction data, which is not limited by the present invention.

In S102, the signed block is issued to other node devices through the first node device in the blockchain network.

It is worth noting that private key information built in each block generation device in the blockchain network is different. Furthermore, the block generation device may broadcast its own public key information to other node devices through the specific node device. In this way, after the signed block issued by a certain node device is received, a corresponding public key is adopted for signature verification. If the signature verification succeeds, it indicates that the issued signed block is legal, that is, the block generation device generating the signed block has the right of adding a new block to the blockchain, and can further verify proof of work of the block and verify whether the block conforms to the format and the standard defined by the protocol. If the signature verification of the signed block fails, the block is refused to be added into the blockchain, thereby ensuring the safety of the blockchain.

In a possible implementation way of an embodiment of the present invention, the block generation device comprises a hash processor unit, and the hash processor unit is responsible for performing hash operation on the block data by adopting a specific hash algorithm. That is, before the above step S101, the block generation device generates the block according to the block data by utilizing the hash processor unit.

The hash algorithm per se may be protected by the hash processor unit built in the block generation device from being easily obtained by others. In addition, a special-purpose processor unit is adopted to be responsible for hash operation to limit the computing power of the node devices. For example, when the blockchain network is initialized, the private keys and the public keys are only allocated to the block generation devices adopting the hash processor units with the same model and specification. After the initialization is completed, when a new block generation device is added, it is also possible that only the block generation device with similar computing power is allowed to add, wherein the adding of the new block generation device in the blockchain network may be performed by the specific node device, and the public key of the newly added block generation device is written into the blockchain by the node device, thereby ensuring the consistency of the computing power of the various nodes, avoiding the single node or a few nodes together from having the computing power exceeding a threshold, further avoiding the formation of "51% attack" and improving the safety of the blockchain.

Further, a key processor unit may also be built in the block generation device, then the above step S101 is as follows specifically: signing the block by utilizing the private key in the key processor unit to obtain the signed block.

That is to say, the private key built in the block generation device is in the key processor unit, thereby realizing the protection of the signing key by utilizing hardware. For example, by adopting a high-safety cryptographic chip, the generation of the key, the encryption and decryption, the signature verification and other computation processes are carried out in the cryptographic chip, it is ensured that the signing private key will not leave the cryptographic chip, thereby realizing high-intensity protection of the key.

It can be seen from the above that in the case of having the hash processor unit and the key processor unit, the block generation device needs to have the specific hash algorithm and the signing key at the same time for generating the effective block, thereby improving the safety of the blockchain network.

In a possible implementation way of an embodiment of the present invention, before the block generation device generates the block according to the block data, the number of the blocks between the block last generated by the block generation device and the latest block in the current blockchain may be further determined through the first node device, and the number of the blocks is determined to be not less than a preset threshold m, wherein *m* is a positive integer greater than or equal to 1 and less than *n,* and *n* is the number of all the node devices in the blockchain network.

That is to say, the block generation device generates a block can only generate a block again after *m* blocks once finishing generating a block, wherein *m* may be specifically set according to actual demands. For example, *m*=*n*-1, namely the block generation device can generate a block again only after (*n*-1) blocks, in this case, all the *n* block generation devices must keep normal operation, otherwise the generation of the blocks of the blockchain will stop. Again, for example, *m*=1, then the block generation device can generate a block again after every block. In this case, (*m*+1) maliciously controlled nodes can form the "51% attack."

In this way, based on the actual situation of the blockchain network, the size of *m* is reasonably set. Because the same block generation device cannot continuously generate blocks, thereby reducing the possibility that the computing power of a certain block generation device is too high to produce the "51% attack."

An embodiment of the present invention further provides another block generation method, the method is applied to a block generation device, as shown in Fig. 2, and the method comprises the following.

In S201, a signed block issued by a first node device in the blockchain network is obtained through a second node device.

In S202, signature verification is performed on the signed block by utilizing public key information.

The public key information may be pre-stored by the second node device, and may also be obtained by the second node device from the signed block.

In S203, proof-of-work verification is performed on the signed block after the signification verification succeeds.

In S204, whether to add the signed block to a blockchain is determined according to the result of the proof-of-work verification.

Specifically, for the generation of the signed block, reference may be made to the method as shown in Fig. 1, and this will not be repeated herein.

It is worth noting that each node device in the blockchain network can not only perform signature verification on the signed blocks issued by other node devices, but also compute and generate the blocks. That is to say, the same block generation device can not only apply the block generation method as shown in Fig. 1, but also apply the block generation method as shown in Fig. 2.

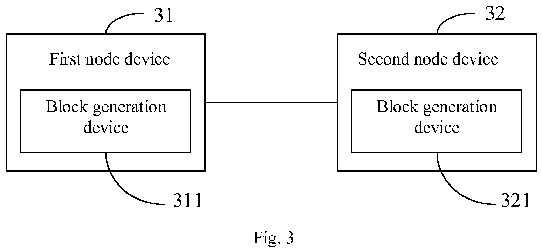

Fig. 3 is a schematic diagram of an implementation environment of an embodiment of the present invention. As shown, the implementation environment includes a first node device 31 and a second node device 32, wherein the first node device 31 and the second node device 32 are any two node devices in the blockchain network. The first node device 31 comprises a block generation device 311, and the second node device 32 comprises a block generation device 321.

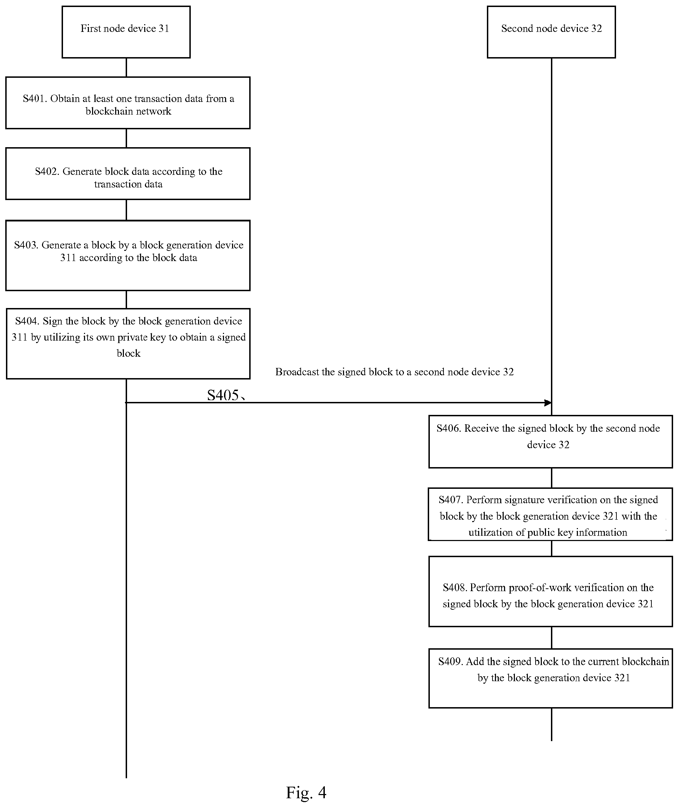

In order to enable those of skill in the art to understand the technical solutions provided by the embodiments of the present invention more easily, a block generation method provided by an embodiment of the present invention is described in detail below with reference to Fig. 3, as shown in Fig. 4, the method comprises the following.

In S401, at least one transaction data from a blockchain network is obtained by a first node device 31.

In S402, block data is generated by the first node device 31 according to the transaction data.

The block data includes the at least one transaction data.

In S403, a block is generated by a block generation device 311 of the first node device 31 according to the block data.

It is worth noting that, in addition to the PoW block generation mechanism described above, the present invention may also generate the block based on other block generation mechanisms, for example, PoS (Proof of Stake), which is not limited by the present invention. For ease of description, an embodiment of the present invention adopts the PoW block generation mechanism as an example for illustration.

In S404, the block is signed by the block generation device 311 of the first node device 31 by utilizing its own private key to obtain a signed block.

In S405, the signed block is broadcast to the second node device 32 by the first node device 31.

In S406, the signed block is received by the second node device 32.

In S407, signature verification is performed on the signed block by the block generation device 321 of the second node device 32 with the utilization of public key information.

Further, if the signature verification succeeds, the step S408 is performed, and if not, the second node device may discard the signed block and will not perform further processing.

In S408, proof-of-work verification is performed on the signed block by the block generation device 321 of the second node device 32.

Further, if the proof-of-work verification succeeds, the step S409 is performed, and if not, the second node device may discard the signed block and refuse to write it to the blockchain.

In S409, the signed block is added to the current blockchain by the block generation device 321 of the second node device 32.

It should be noted that, in the above process, the block generation device 321 of the second node device 32 may also generate the signed block and broadcast the signed block to the first node device 31 through the second node device, and the block generation device 321 of the first node device 31 may perform signature verification on the signed block received by the first node device 31 and perform the subsequent proof-of-work verification. For details, please refer to the above method steps, and the details will not be repeated herein.

The above is only an example. The block generating devices as shown in Fig. 3 are part of the node devices. Alternatively, the block generation devices may also be connected communicatively to the node devices as separate devices. In this case, in the above method steps as shown in Fig. 4, the interaction involved between the block generation devices and the node devices may be implemented through a communication interface. The present invention is not limited thereto.

In addition, for the foregoing embodiment of the method, for ease of description, the method is expressed as a series of action combinations. However, those skilled in the art should understand that the embodiments described in the specification are preferred embodiments, and the actions involved are not necessarily required by the present invention. For example, the block generation device may also generate a block without obtaining the transaction data.

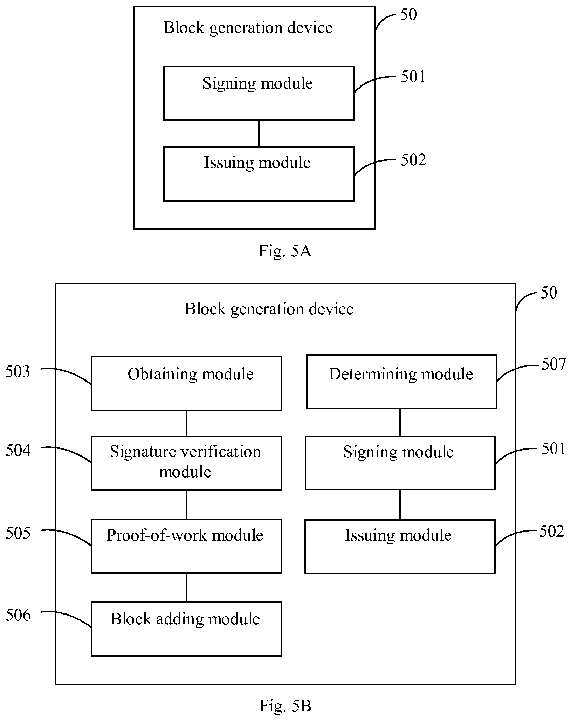

An embodiment of the present invention further provides a block generation device 50 for implementing a block generation method provided by Fig. 1, private key information is built in the block generation device 50, as shown in Fig. 5A, and the block generation device 50 comprises:
a signing module 501 for signing a block generated by the block generation device according to the private key information to obtain a signed block; and
an issuing module 502 for issuing the signed block to other node devices through a first node device in a block chain network.

By adopting the above block generation device, after the block is generated by the block generation device, the block is signed with the private key, and the signed block obtained after being signed with the private key is issued to other node devices through the first node device in the blockchain network. In this way, other node devices may verify the identity of the block generation device through the signature verification of the signed block. Thus, for the illegal block generating device, the blockchain network may refuse to add the generated block into the blockchain, and further ensure the safety of the blockchain.

Optionally, as shown in Fig. 5B, the block generation device 50 further comprises:
an obtaining module 503 for obtaining, through the first node device, the signed block issued by a second node device in the blockchain network; a signature verification module 504 for performing signature verification on the signed block issued by the second node device according to public key information; a proof-of-work module 505 for performing proof-of-work verification on the obtained signed block after the signature verification succeeds; and a block adding module 506 for determining whether to add the signed block to a blockchain according to the verification result of proof of work.

That is to say, after the signed block issued by a certain node device is received by the block generation device 50, a corresponding public key is adopted for signature verification. If the signature verification succeeds, it indicates that the issued signed block is legal, that is, the block generation device generating the signed block has the right of adding a new block to the blockchain, and can further verify proof of work of the block and verify whether the block conforms to the format and the standard defined by the protocol. If the signature verification of the signed block fails, the block is refused to be added into the blockchain, thereby ensuring the safety of the blockchain.

Optionally, as shown in Fig. 5B, the block generation device 50 further comprises: a determining module 507 for determining the number of the blocks between the block last generated by the block generation device and the latest block in the current blockchain through the first node device before that the signing module signs the block generated by the block generation device according to the private key; and determining that the number of the blocks is not less than a preset threshold m, wherein *m* is a positive integer greater than or equal to 1 and less than *n,* and *n* is the number of all the node devices in the blockchain network.

It is worth noting that, Fig. 5 is only an example. In specific implementation, the block generation device may also comprise other parts, which are not shown in the figure one by one, such as a memory for storing relevant key information. Or the block generation device may also adopt a high-safety cryptographic chip, the generation of the key, the encryption and decryption, the signature verification and other computation processes are carried out in the cryptographic chip, which ensures that the signing private key will not leave the cryptographic chip, thereby realizing high-intensity protection of the key.

It should be clearly understood by those skilled in the art that, for convenience and brevity of the description, for the specific working process of each module of the above-mentioned block generation device, reference may be made to the corresponding process in the above embodiment of the method, and the details will not be repeated herein.

In addition, the above division of the modules composing the block generation device is only one logical function division, and other division ways may also be adopted in actual implementation. Furthermore, the physical implementation of the various modules may also adopt a variety of ways, which is not limited by the present invention.

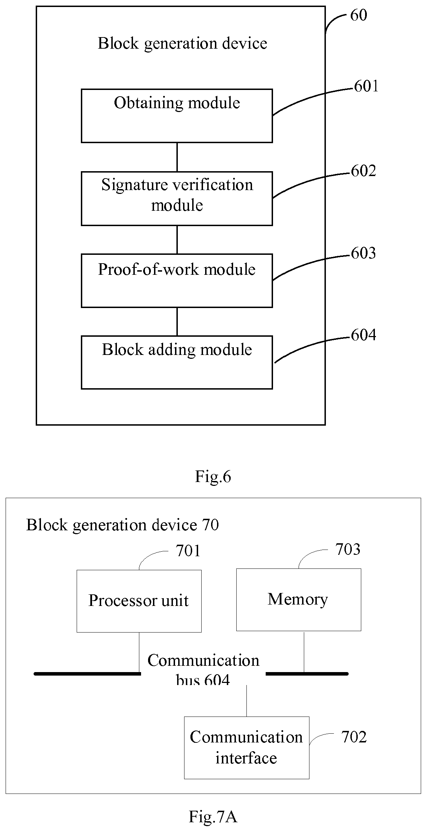

An embodiment of the present invention further provides another block generation device 60 for implementing a block generation method provided by Fig. 2, as shown in Fig. 6, and the block generation device 60 comprises:
an obtaining module 601 for obtaining, through a second node device, a signed block issued by a first node device in the block chain network;
a signature verification module 602 for performing signature verification on the signed block by utilizing public key information;
a proof-of-work module 603 for performing proof-of-work verification on the signed block; and
a block adding module 604 for determining whether to add the block obtained after decryption to a block chain according to the verification result of proof of work.

It should be clearly understood by those skilled in the art that, for convenience and brevity of the description, for the specific working process of each unit of the above-mentioned block generation device, reference may be made to the corresponding process in the above embodiment of the method, and the details will not be repeated herein.

In addition, the above division of the modules composing the block generation device is only one logical function division, and other division ways may also be adopted in actual implementation. Furthermore, the physical implementation of the various modules may also adopt a variety of ways, which is not limited by the present invention.

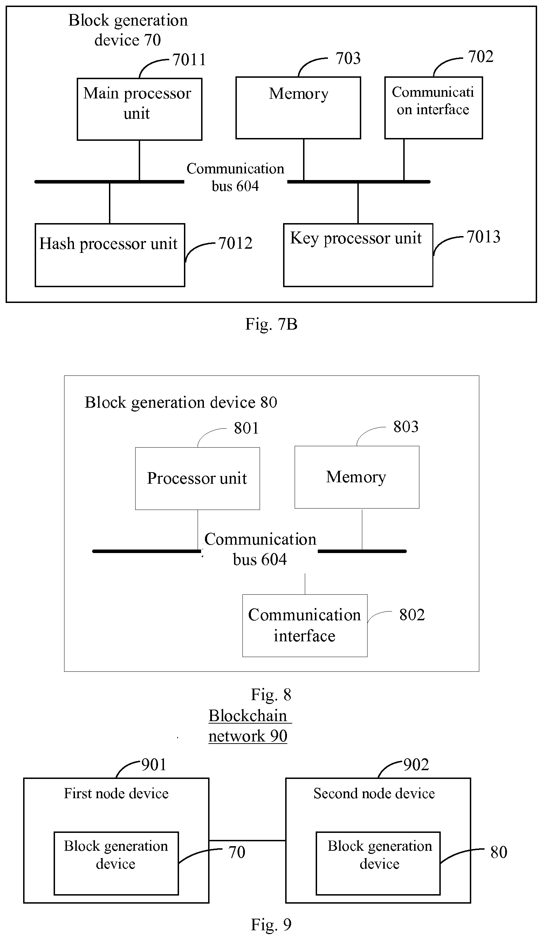

An embodiment of the present invention further provides a block generation device 70, as shown in Fig. 7A, the block generation device 70 comprises:
at least one processor unit (such as a processor unit 701 as shown in Fig. 7), a communication interface 702, a memory 703 and a communication bus 704; the at least one processor unit, the communication interface 702, and the memory 703 communicate with each other through the communication bus 704; and
the memory 703 is configured to store program codes; and the program codes include computer operating instructions and a network flow diagram. The memory 703 may carry a high-speed RAM (Random Access Memory) and may also include a non-volatile memory, such as at least one magnetic disk storage.
the at least one processor unit is configured to run the program codes to implement the following operations:
   signing a block generated by the block generation device according to private key information built in the block generation device to obtain a signed block; and
   issuing the signed block to other node devices through a first node device in the blockchain network.

Optionally, as shown in Fig. 7B, the at least one processor unit comprises a main processor unit 7011 and a hash processor unit 7012; and the main processor unit is configured to perform hash calculation according to a specific hash algorithm built in the hash processor unit to obtain the block. In this way, the main processor unit is further used to obtain transaction data through the first node device, and the block obtained by computation of the hash processor unit includes the transaction data.

The hash processor unit 7012 built in the block generation device may protect the hash algorithm from being easily obtained by others. In addition, a special-purpose processor unit is adopted to be responsible for hash operation to limit the computing power of the node devices. The single node or a few nodes together is/are avoided from having the computing power exceeding a threshold, the formation of "51% attack" is further avoided and the safety of the blockchain is improved.

Optionally, as shown in Fig. 7B, the at least one processor unit further comprises a key processor unit 7013, and the main processor unit 7011 is configured to sign the block according to a private key in the key processor unit to obtain the signed block. That is to say, hardware is utilized to protect the signing key, for example, by adopting a high-safety cryptographic chip, the generation of the key, the encryption and decryption, the signature verification and other computation processes are carried out in the cryptographic chip, so as to ensure that the signing private key will not leave the cryptographic chip, thereby realizing high-intensity protection of the key.

An embodiment of the present invention further provides another block generation device 80, as shown in Fig. 8, the block generation device 80 comprises:
at least one processor unit (such as a processor unit 801 as shown in Fig. 8), a communication interface 802, a memory 803 and a communication bus 804; the at least one processor unit, the communication interface 802, and the memory 803 communicate with each other through the communication bus 804;
the memory 803 is configured to store program codes;
the at least one processor unit is configured to run the program codes to implement the following operations:
   obtaining, through a second node device, a signed block issued by a first node device in the blockchain network;
   performing signature verification on the signed block according to public key information;
   performing proof-of-work verification on the signed block after the signature verification succeeds; and
   determining whether to add the signed block to a blockchain according to the result of the proof-of-work verification.

An embodiment of the present invention further provides a blockchain network 90, wherein the blockchain network includes at least two node devices. As shown in Fig. 9, the at least two node devices include a first node device 901, wherein the first node device 901 comprises the block generation device 70 as shown in Fig. 7A or Fig. 7B. For details, specifically refer to the description corresponding to Fig. 7A or Fig. 7B, and the details will not be repeated herein. Alternatively, the first node device 901 comprises the block generation device 50 as shown in Fig. 5A or Fig. 5B. For details, specifically refer to the description corresponding to Fig. 5A or Fig. 5B, and the details will not be repeated herein.

The at least two node devices include a second node device 902, wherein the second node device comprises the block generation device 80 as shown in Fig. 8. For details, specifically refer to the description corresponding to Fig. 8, and the details will not be repeated herein. Alternatively, the second node device 902 comprises the block generation device 60 as shown in Fig. 6. For details, specifically refer to the description corresponding to Fig. 6, and the details will not be repeated herein.

In this way, based on authority control of the public and the private keys, the blockchain network, such as a blockchain private chain is constituted by utilizing the block generation devices with the consistent computing power. As the probability of generating the block of each block is substantially consistent, the difficulty in achieving the "51% attack" condition is further increased and the safety of the blockchain is further improved.

In the several embodiments provided by the application, it should be understood that the disclosed network, device and method may be implemented in other ways. For example, the device embodiments described above are only illustrative, multiple modules may be combined or may be integrated into another system, or some features may be ignored or may not be implemented.

In addition, the various functional modules in the various embodiments of the present invention may be integrated into one processing unit, or each module may exist physically separately, or two or more modules may be integrated into one module. The above integration unit implemented in the form of software functional units may be stored in a computer readable storage medium.

The above integration unit implemented in the form of software functional units may be stored in a computer readable storage medium. The above software functional units are stored in a storage medium, including a number of instructions for enabling a computer device (which may be a personal computer, a server, or a network device, etc.) to perform some of the steps of the methods described in the various embodiments of the present invention. The above-mentioned storage media include: USB disks, mobile hard disks, RAMs, magnetic disks or compact disks and other various media capable of storing the data.

## Claims

1. A block generation method, wherein the method is applied to a block generation device, private key information is built in the block generation device, and the method comprises
signing a block generated by the block generation device according to the private key information to obtain a signed block; and
issuing the signed block to other node devices through a first node device in a blockchain network;
wherein the block generation device comprises a hash processor unit, when the blockchain network is initialized, private key and public key information is only allocated to block generation devices with hash processor units of the same model and specification;
before signing the block generated by the block generation device according to the private key information, the method comprises:
performing hash calculation according to a specific hash algorithm built in the hash processor unit to obtain the block;
particularly, before performing the hash calculation according to the specific hash algorithm built in the first processing unit to obtain the block, the method further comprises:
obtaining transaction data through the first node device, wherein the block includes the transaction data.

2. The method according to claim 1, wherein the block generation device comprises a key processor unit, and signing the block generated by the block generation device according to the private key information comprises:
signing the block according to the private key information in the key processor unit to obtain the signed block.

3. The method according to any one of claims 1-2, wherein the method further comprises:
obtaining, through the first node device, a signed block issued by a second node device in the blockchain network;
performing signature verification on the signed block issued by the second node device according to public key information;
performing proof-of-work verification on the obtained signed block after the signification verification succeeds; and
determining whether to add the signed block to a blockchain according to a result of the proof-of-work verification.

4. The method according to any one of claims 1-2, wherein, before signing the block generated by the block generation device according to the private key information, the method comprises:
determining, through the first node device, a number of blocks between a block last generated by the block generation device and a latest block in the current blockchain; and
determining that the number of the blocks is not less than a preset threshold m, wherein m is a positive integer greater than or equal to 1 and less than n, and n is a number of node devices in the blockchain network.

5. A block generation hardware device, comprising
at least one processor unit, a communication interface, a memory and a communication bus; the at least one processor unit, the communication interface, and the memory communicate with each other through the communication bus;
the memory is configured to store program codes;
the at least one processor unit is configured to run the program codes to implement the the method according to any one of claims 1-4.

6. A computer program product, wherein the computer program product comprises a computer program executable by a programmable device, and the computer program comprises a code portion for performing the method according to any of claims 1-4 when executed by the programmable device.

## Patentansprüche

1. Ein Blockerzeugungsverfahren, wobei
das Verfahren auf eine Blockerzeugungsvorrichtung angewendet wird, Informationen zu privaten Schlüsseln in der Blockerzeugungsvorrichtung aufgebaut werden, und das Verfahren
das Signieren eines durch die Blockerzeugungsvorrichtung erzeugten Blocks gemäß der Informationen zu privaten Schlüsseln umfasst, um einen signierten Block zu erhalten; und
das Ausgeben des signierten Blocks an andere Knotenvorrichtungen durch eine erste Knotenvorrichtung in einem Blockchain Netzwerk umfasst;
wobei die Blockerzeugungsvorrichtung eine Hash-Prozessoreinheit umfasst,
wenn das Blockchain-Netzwerk initialisiert wird, Informationen zu privaten Schlüsseln und öffentlichen Schlüsseln nur an Blockerzeugungsvorrichtungen mit Hash-Prozessoreinheiten desselben Modells und derselben Spezifikation zugewiesen werden;
vor dem Signieren des von der Blockerzeugungsvorrichtung erzeugten Blocks gemäß der Informationen zu privaten Schlüsseln, das Verfahren Folgendes umfasst:
Durchführen einer Hash-Berechnung gemäß einem spezifischen Hash-Algorithmus,
der in der Hash Prozessoreinheit eingebaut ist, um den Block zu erhalten;
insbesondere vor der Durchführung der Hash-Berechnung gemäß dem spezifischen Hash-Algorithmus, der in der ersten Verarbeitungseinheit aufgebaut ist, um den Block zu erhalten, umfasst das Verfahren ferner:
Erhalten von Transaktionsdaten durch die erste Knotenvorrichtung, wobei der Block die Transaktionsdaten enthält.

2. Verfahren nach Anspruch 1, wobei
die Blockerzeugungsvorrichtung eine Schlüsselprozessoreinheit umfasst, und das Signieren des von der Blockerzeugungsvorrichtung erzeugten Blocks gemäß der Informationen zu privaten Schlüsseln umfasst:
Signieren des Blocks gemäß der privaten Schlüsselinformation in der Schlüsselprozessoreinheit, um den signierten Block zu erhalten.

3. Verfahren nach einem der Ansprüche 1 bis 2, wobei
das Verfahren ferner umfasst:
Erhalten eines signierten Blocks durch die erste Knotenvorrichtung, der von einer zweiten Knotenvorrichtung in dem Blockchain-Netzwerk ausgegeben wurde;
Durchführen einer Signaturprüfung an dem signierten Block, der von der zweiten Knotenvorrichtung gemäß der Information des öffentlichen Schlüssels ausgegeben wird;
Durchführen einer Proof-of-Work-Verifizierung an dem erhaltenen signierten Block, nachdem die Signifikationsverifizierung erfolgreich ist; und
Bestimmen, ob der signierte Block zu einer Blockchain hinzugefügt werden soll, in Abhängigkeit von einem Ergebnis der Proof-of-Work-Verifikation.

4. Verfahren nach einem der Ansprüche 1-2, wobei
vor dem Signieren des von der Blockerzeugungsvorrichtung erzeugten Blocks gemäß der Informationen zu privaten Schlüsseln, das Verfahren Folgendes umfasst:
Bestimmen, durch die erste Knotenvorrichtung, einer Anzahl von Blöcken zwischen einem Block, der zuletzt durch die Blockerzeugungsvorrichtung erzeugt wurde und einem letzten Block in der aktuellen Blockchain; und
Bestimmen, dass die Anzahl der Blöcke nicht kleiner als ein voreingestellter Schwellenwert m ist, wobei m eine positive ganze Zahl größer oder gleich 1 und kleiner als n ist, und n eine Anzahl von Knotenvorrichtungen in dem Blockchain-Netzwerk ist.

5. Eine Hardware- Blockerzeugungsvorrichtung, die Folgendes umfasst:
mindestens eine Prozessoreinheit, eine Kommunikationsschnittstelle, einen Speicher und einen Kommunikationsbus; die mindestens eine Prozessoreinheit, die Kommunikationsschnittstelle und der Speicher kommunizieren miteinander über den Kommunikationsbus;
der Speicher ist zum Speichern von Programmcodes ausgebildet;
die mindestens eine Prozessoreinheit ist dazu ausgebildet, die Programmcodes des Verfahrens nach einem der Ansprüche 1-4 auszuführen.

6. Ein Computerprogrammprodukt, wobei das Computerprogrammprodukt ein Computerprogramm umfasst, das von einer programmierbaren Vorrichtung ausführbar ist, und das Computerprogramm einen Codeabschnitt zur Durchführung des Verfahrens nach einem der Ansprüche 1-4 umfasst, wenn es von der programmierbaren Vorrichtung ausgeführt wird

## Revendications

1. Procédé de génération de blocs, dans lequel le procédé est appliqué à un dispositif de génération de blocs, des informations de clé privée sont intégrées dans le dispositif de génération de blocs, et le procédé comprend
la signature d'un bloc généré par le dispositif de génération de blocs selon les informations de clé privée pour obtenir un bloc signé ; et
la délivrance du bloc signé à d'autres dispositifs de nœud par le biais d'un premier dispositif de nœud dans un réseau à chaîne de blocs ;
dans lequel le dispositif de génération de blocs comprend une unité de processeur de hachage, lorsque le réseau à chaîne de blocs est initialisé, des informations de clé privée et de clé publique sont uniquement allouées à des dispositifs de génération de blocs ayant des unités de processeur de hachage de modèle et de spécification identiques ;
avant la signature du bloc généré par le dispositif de génération de blocs selon les informations de clé privée, le procédé comprend :
la réalisation d'un calcul de hachage selon un algorithme de hachage spécifique intégré dans l'unité de processeur de hachage pour obtenir le bloc ;
en particulier, avant la réalisation du calcul de hachage selon l'algorithme de hachage spécifique intégré dans la première unité de traitement pour obtenir le bloc, le procédé comprend en outre :
l'obtention de données de transaction par le biais du premier dispositif de nœud, dans lequel le bloc inclut les données de transaction.

2. Procédé selon la revendication 1, dans lequel le dispositif de génération de blocs comprend une unité de processeur de clé, et la signature du bloc généré par le dispositif de génération de blocs selon les informations de clé privée comprend :
la signature du bloc selon les informations de clé privée dans l'unité de processeur de clé pour obtenir le bloc signé.

3. Procédé selon l'une quelconque des revendications 1 à 2, dans lequel le procédé comprend en outre :
l'obtention, par le biais du premier dispositif de nœud, d'un bloc signé délivré par un second dispositif de nœud dans le réseau à chaîne de blocs ;
la réalisation d'une vérification de signature sur le bloc signé délivré par le second dispositif de nœud selon des informations de clé publique ;
la réalisation d'une vérification par preuve de travail sur le bloc signé obtenu après que la vérification de signification a réussi ; et
la détermination de s'il faut ajouter le bloc signé à une chaîne de blocs selon un résultat de la vérification par preuve de travail.

4. Procédé selon l'une quelconque des revendications 1 à 2, dans lequel, avant la signature du bloc généré par le dispositif de génération de blocs selon les informations de clé privée, le procédé comprend :
la détermination, par le biais du premier dispositif de nœud, d'un nombre de blocs entre un bloc généré en dernier par le dispositif de génération de blocs et un dernier bloc dans la chaîne de blocs actuelle ; et
la détermination que le nombre de blocs n'est pas inférieur à un seuil prédéfini m, dans lequel m est un nombre entier positif supérieur ou égal à 1 et inférieur à n, et n est un nombre de dispositifs de nœud dans le réseau à chaîne de blocs.

5. Dispositif matériel de génération de blocs, comprenant :
au moins une unité de processeur, une interface de communication, une mémoire et un bus de communication ; l'au moins une unité de processeur, l'interface de communication et la mémoire communiquant les unes avec les autres par le biais du bus de communication ;
la mémoire est configurée pour stocker des codes de programme ;
l'au moins une unité de processeur est configurée pour faire fonctionner les codes de programme pour mettre en œuvre le procédé selon l'une quelconque des revendications 1 à 4.

6. Produit programme d'ordinateur, dans lequel le produit programme d'ordinateur comprend un programme d'ordinateur exécutable par un dispositif programmable, et le programme d'ordinateur comprenant une partie de code pour la réalisation du procédé selon l'une quelconque des revendications 1 à 4 lors de son exécution par le dispositif programmable.
